# EUROPEAN PATENT APPLICATION

(11) **EP 2 364 027 A2**
(43) Date of publication of application: **07.09.2011**
(21) Application number: 11154904.4
(22) Date of filing: 17.02.2011
(51) Int. Cl.: H04N 9/31, H04N 17/04

(54) **Automatic calibration of projection system using non-visible light**

(30) Priority: 03.03.2010 US 716772
(71) Applicant: Christie Digital Systems USA, Inc., Cypress, CA 90630 (US)
(72) Inventor: Flatt, Robert, Kitchener, Ontario N2M 2Z7 (CA); Nicholson, Stuart, Waterloo, Ontario N2V 2V8 (CA); Wright, Kevin, Waterloo, Ontario N2L 5S1 (CA)
(74) Representative: Walker, Ross Thomson

(57) **Abstract**

A method and apparatus for calibration of a projection system, comprising projecting visible and non-visible images on at least one image plane, detecting said non-visible images projected on the image plane, and calibrating projection of the visible images using the non-visible images. The visible and non-visible images are simultaneously projected and the non-visible images are continually monitored for automatic calibration of composite displays, without taking the projection system off-line. In addition, calibration can be maintained through continuous automatic adjustment using invisible calibration patterns, even if the system is disturbed while it is operating.

## Description

### FIELD

This specification relates generally to projection systems, and specifically to a method and apparatus for automatic calibration of projection systems using non-visible light.

### BACKGROUND

It is known in the art to provide projection systems with multiple overlapping displays. Such systems may be used to create arbitrarily large and irregularly shaped composite displays suitable for use in immersive environments (e.g. simulators) and large venues such as shopping malls and amphitheatres. One challenge with such composite displays is maintaining calibration (e.g. geometrical alignment, brightness equalization, etc.) of the multiple displays. Manual calibration is often time consuming, and requires that the projection system be 'off-line' while calibration is being performed. In an effort to at least partially address this challenge, machine vision systems have been designed for automatically calibrating composite displays more quickly and accurately than is possible with manual calibration. Although such machine vision systems result in faster calibration than is possible with manual adjustment, the projection system must nonetheless continue to be taken off-line in order to project the calibration patterns required to effect the automatic calibration. It is also difficult to automatically determine when a system needs to be realigned without taking the system off-line.

Projection systems are also known in the art for projecting non-visible light in addition to visible light. Such systems are used in applications, such as night vision (NVIS) applications, where projection of images in non-visible spectra is desirable. Such non-visible images are generally viewable through the use of special equipment. An example of a non-visible image is an image projected using infrared (IR) light and hence, in these instances, the non-visible images are viewable in the simulation/visualization environment through the use of NVIS goggles and/or IR image detectors.

### SUMMARY

The inventors have recognized that such prior art projectors may be used to simultaneously project visible and non-visible light and continually monitor patterns of invisible calibration patterns for automatic calibration of composite displays, without taking the projection system off-line. In addition, calibration can be maintained through continuous automatic adjustment using invisible calibration patterns, even if the system is disturbed (e.g. accidentally bumped) while it is operating.

### BRIEF DESCRIPTIONS OF THE DRAWINGS

The foregoing and other aspects of the invention are described in greater detail below, with reference to the following figures, in which:

Figure 1 is a block diagram showing a projection system for performing automatic calibration using non-visible light, according to a non-limiting embodiment;

Figure 2 is a block diagram showing details of the projection system in Figure 1;

Figure 3 is a block diagram showing details of a projector head assembly of the projection system of Figure 1;

Figure 4 is a flowchart showing an exemplary method of calibrating the projections system shown in Figures 1 ― 3.

### DETAILED DESCRIPTION OF THE EMBODIMENTS

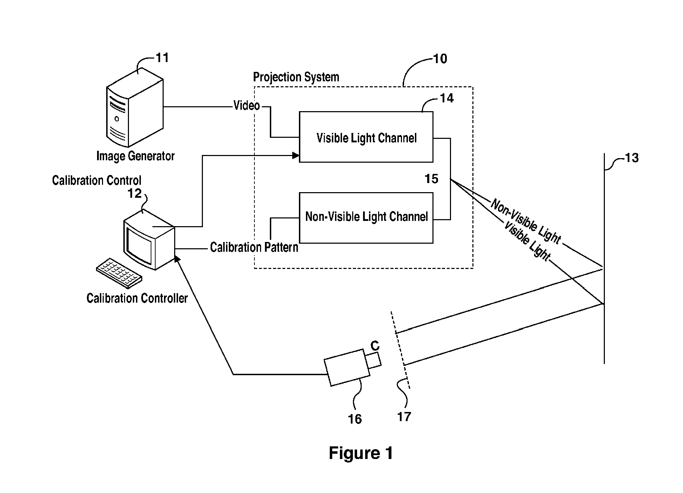

Figure 1 depicts a projection system 10 for projecting visible images from an image generator 11 and non-visible images from a calibration controller 12 on a display 13. Although the calibration controller 12 is illustrated as being a separate component external to the projection system 10, all or portions of the calibration controller 12 may be incorporated into the projection system 10 or image generator 11.

The calibration controller 12 triggers generation of at least one non-visible calibration pattern (either via the controller 12, the image generator 11 or the projection system 10), for projection onto a display 13 (e.g. one of a plurality of displays comprising a composite display). The non-visible calibration pattern is projected via a non-visible light channel 15 simultaneously with projection of the video image via a visible light channel 14. The non-visible light can be detected, for example, using off-the-shelf camera equipment. For example, a standard CCD-based camera 16 which is capable of detecting light in the near-IR portion of the spectrum can therefore be used to detect the non-visible light by filtering the visible light using a visible light filter 17.

The detected non-visible calibration patterns are transmitted back to the calibration controller 12 for performing calibration (and re-calibration) of the projection system 10 using known techniques. For example, warp-capable projection systems such as the Matrix™ series of projectors from Christie Digital Systems Canada, Inc. can perform calibration through geometry correction and edge blending algorithms. Alternatively, calibration can be performed through image correction at the image generator 11.

As discussed above, the re-calibration can be performed using non-visible calibration patterns without interrupting the visible light channel 14. This is particularly advantageous for projections systems deployed in high usage environments such as theme parks, simulators, command and control centers, etc., where shutting down the system for calibration would be disadvantageous.

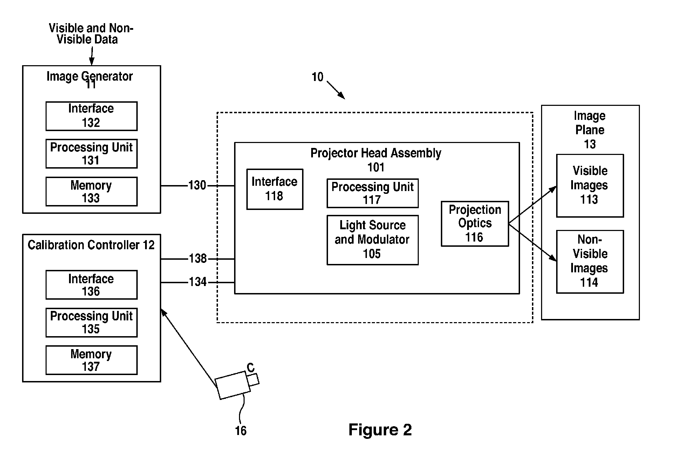

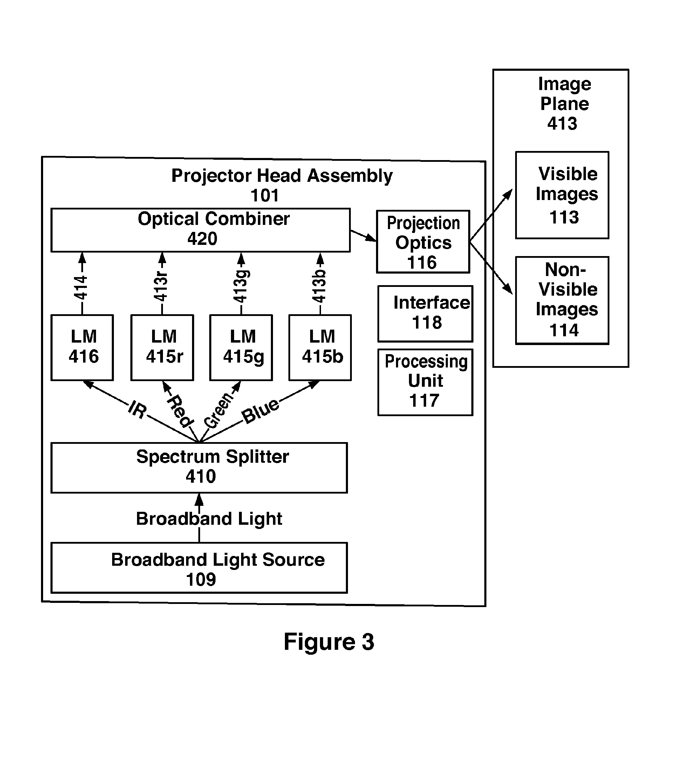

One embodiment of projection system 10 for generating non-visible light patterns is set forth in greater detail below with reference to Figures 2 and 3.

The projection system 10 comprises a projector head assembly 101 having a light source and modulator 105 for emitting visible light (i.e. light in the visible light spectrum from about 380 to 750 nm, or a subset of the visible light spectrum) and a non-visible light source for emitting non-visible light (i.e. light outside of the visible light spectrum, such as infrared and/or ultraviolet light).

The image generator 11 and calibration controller 12 are shown connected to projection system 10 via data links 130 and 134, respectively. The image generator 11 comprises a processing unit 131, a communication interface 132 and a memory 133. The processing unit 131 is enabled for receiving visible data representing the visible images 113 to be projected by the projector 101. The visible data can represent color or monochrome images, as desired. The image generator includes an interface 132 for communicating with the projector head assembly 101, and specifically for conveying the video data to the projector head assembly 101 via link 130.

The calibration controller 12 comprises a processing unit 135, a communication interface 136 and a memory 137. The processing unit 135 is enabled for generating and transmitting calibration patterns to the projection system 10 via a data link 134 and for receiving the non-visible light signals from camera 16 representing the calibration patterns projected onto image plane 13.

The processing unit 117 then merges or replaces a portion of the visible data received from image generator 11 with at least a portion of the non-visible data received from calibration controller 12 such that the visible images 113 and the non-visible images 114 are co-projected by the projector head assembly 101. For example, in one embodiment visible data is received from image generator 11 at 60 Hz and an image is projected at 120 Hz alternating between non-visible calibration patterns and visible images.

Upon receipt of the non-visible light signals from camera 16, processing unit 135 determines whether re-calibration is required and if so performs image calibration or re-calibration in accordance with known algorithms and transmits calibration control signals to the projections system 10 via data link 138.

The video signal (comprising the combined visible data and the non-visible data) from processing unit 117 is applied to light source and modulator 105 to modulate the visible and non-visible light and thereby generate and/or transmit visible and non-visible light in a sequence that is coordinated by the processing unit 117. The visible images 113 and non-visible images 114 are then both projected onto the image plane 13 by the projection optics 116.

Attention is now directed to Figure 3 which depicts a non-limiting embodiment of the projector head assembly 101 comprising a processing unit 117 and an interface 118. The projector head assembly 101 further comprises projection optics 116 for projecting visible images 113 and non-visible images 114 onto image plane 13.

The projector head assembly 101 further comprises a broadband light source 109 and a spectrum splitter 410 for splitting light from the broadband light source 109 into non-visible light (e.g. IR light) and respective components of visible light, for example red, green and blue components. In some embodiments, the spectrum splitter 410 comprises, at least one of a prism and one or more dichroic filters (not pictured).

The projector head assembly 101 further comprises a plurality of light modulators 415r, 415g, 415b for receiving and modulating a respective component of visible light from the spectrum splitter 410 to form a respective component (413r, 413g, 413b) of visible images 113. The projector head assembly 101 further comprises at least one non-visible light modulator 416 for receiving and modulating non-visible light from the spectrum splitter to form the non-visible images 114 independent of the visible images 113. For example, the non-visible light modulator 416 can be enabled to modulate infrared (IR) and/or ultraviolet (UV) light. In some embodiments, the projector head assembly 101 can comprise a plurality of non-visible light modulators, which can be similar to non-visible light modulator 416, each of the plurality of non-visible light modulators enabled to modulate different (and/or the same) spectra of non-visible light. In these embodiments, the spectrum splitter 410 is further enabled to split the broadband light into a plurality of non-visible light spectra. For example, the projector head assembly 101 can comprise at least a first non-visible light modulator for modulating IR light, and a second non-visible light modulator for modulating UV light. Other combinations of non-visible light modulators for modulating non-visible light (e.g. different ranges of IR and/or UV light) are within the scope of present the illustrated embodiments.

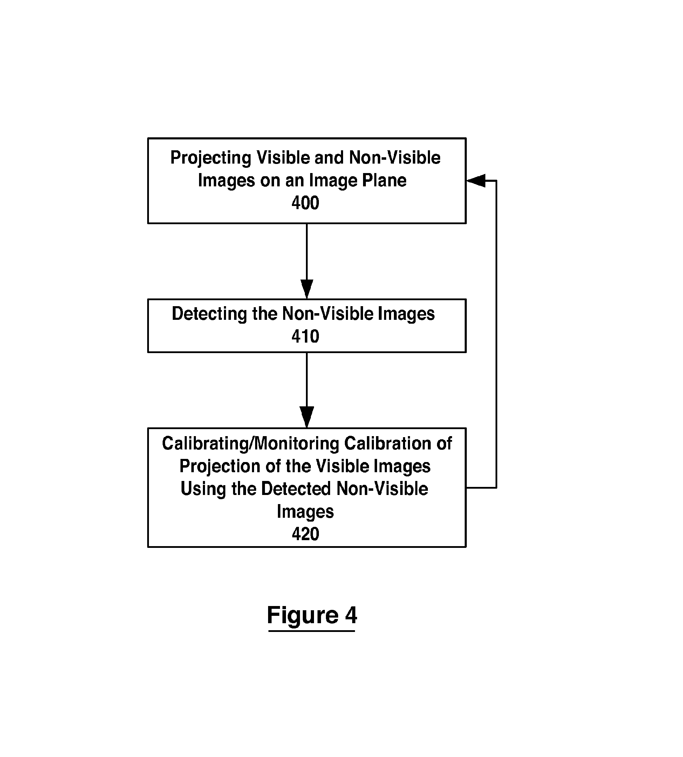

The projector head assembly 101 further comprises an optical combiner 420 enabled for combining the non-visible images 114 and respective components (413r, 413g, 413b) of the visible images 113 from the light modulators 416 and 415r, 415g, 415b, respectively and directing the combined images to the projection optics 116. The projection optics 116 are enabled to focus the non-visible images 114 and visible images 113 onto the image plane 13. For example, in some embodiments, the optical combiner 420 can comprise at least one of a dichroic filter and a beam splitter, each used in a combining mode. Other suitable optical combiners are within the scope of present embodiments. As in Figure 1, while Figure 4 depicts the visible images 113 and the non-visible images 114 as being projected in different directions, it is understood that they have been depicted as such for clarity only. Indeed, it is further understood that each of the visible images 113 and the non-visible images 114 is projected in the image plane 13 and the visible and non-visible images are substantially aligned. Each of light modulators 415r, 415g, 415b and the non-visible light modulator 416 can be controlled to operate in parallel or in sequence as desired.

Additional details of the projection system 10 are set forth in co-pending patent application no. 12/289,701, filed October 31, 2008, entitled METHOD, SYSTEM AND APPARATUS FOR PROJECTING VISIBLE AND NON-VISIBLE IMAGES, the contents of which are incorporated herein by reference.

Attention is now directed to Figure 4 which depicts a method for automatic calibration of the projection system 10 using non-visible light. At step 400, visible images from image generator 11 and non-visible images from calibration controller 12 are projected onto an image plane 13 via the projection system 10, as discussed above.

Next, at step 410, the camera 16 detects the non-visible images (i.e. calibration patterns). The detected non-visible calibration patterns are transmitted back to the calibration controller 12 for performing calibration (and re-calibration) of the projection system 10 at step 420 using geometry correction and/or edge blending algorithms, as is known in the art. As discussed above, the re-calibration can be performed using non-visible calibration patterns without interrupting the visible light channel 14.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. Calibration apparatus, comprising:
a projection system (10) for projecting visible and non-visible images on at least one image plane (13);
a non-visible light detector (16) for detecting said non-visible images projected on said at least one image plane; and
a calibration controller (12) for calibrating projection of said visible images using said non-visible images.

2. The apparatus of claim 1, wherein said projection system further comprises:
a broadband light source (109) for generating visible and non-visible light;
a spectrum splitter (410) enabled to split light from said broadband light source into non-visible light and respective colour components of visible light;
a plurality of visible light modulators (415r, 415g, 415b) enabled to receive and modulate said respective colour components of said visible light into said visible images; and
a non-visible light modulator (416) enabled to receive and modulate said non-visible light to form said non-visible images independent or said visible images.

3. The apparatus of claim 2, wherein said spectrum splitter comprises at least one of at least one prism and at least one dichroic filter.

4. The apparatus of claim 1, wherein said projection system comprises a plurality of projectors for projecting visible and non-visible images on a plurality of tiled image planes and said calibration controller calibrates projection of said visible images using said non-visible images so that said visible images are correctly aligned across said plurality of image planes.

5. The apparatus of claim 1 or 4, further comprising an image generator (11) for generating and transmitting at least one of said visible and non-visible images to said projection system.

6. The apparatus of claim 1 or 4, wherein said non-visible light detector comprises a camera.

7. The apparatus of claim 6, further comprising a filter (17) for filtering visible light from being received by said camera.

8. The apparatus of claim 4, wherein each of said projectors further comprises:
a broadband light source (109) for generating visible and non-visible light;
a spectrum splitter (410) enabled to split light from said broadband light source into non-visible light and respective colour components of visible light;
a plurality of visible light modulators (415r, 415g, 415b) enabled to receive and modulate said respective colour components of said visible light into said visible images; and
a non-visible light modulator (416) enabled to receive and modulate said non-visible light to form said non-visible images independent of said visible images.

9. The apparatus of claim 8, wherein said spectrum splitter comprises at least one of at least one prism and at least one dichroic filter.

10. A method for calibration of a projection system, comprising:
projecting visible and non-visible images on at least one image plane;
detecting said non-visible images projected on said at least one image plane; and
calibrating projection of said visible images using said non-visible images.

11. The method of claim 10, wherein said images are projected on a plurality of tiled image planes, said non-visible images projected on said plurality of tiled image planes are detected, said visible images are calibrated using said non-visible images so that said visible images are correctly aligned across said plurality of image planes.

12. The method of claim 10, further comprising monitoring calibration of said visible images using said non-visible images.
